# EUROPEAN PATENT SPECIFICATION

(11) **EP 0 717 221 B1**
(45) Date of publication and mention of the grant of the patent: **07.07.1999**
(21) Application number: 95306081.1
(22) Date of filing: 31.08.1995
(51) Int. Cl.: F16L 1/15, F16L 1/20, F16L 1/235

(54) **Combined apparatus for handling of modules and tools and laying of elongate articles**
Kombinierte Vorrichtung zur Behandlung von Modulen und Geräten und zur Verlegung von langgestreckten Gegenständen
Appareil combiné pour manipuler des modules et outils et pour poser des objets allongés

(30) Priority: 16.12.1994 NO 944896
(43) Date of publication of application: 19.06.1996
(73) Proprietor: STOLT COMEX SEAWAY A/S, 4001 Stavanger (NO)
(72) Inventor: Lupi, Ange, F-13008 Marseille (FR); Branchut, Jean-Pierre, F-17220 Croix Chapeau (FR)
(74) Representative: Ede, Eric

(56) References cited:
- EP-A- 0 661 488
- WO-A-91/15699
- US-A- 3 585 806

## Description

The present invention relates to a combined apparatus for handling modules and tools and laying of elongate flexible articles from a vessel supported on a body of water.

According to WO-A-91/15699, when laying a cable or pipeline offshore the cable or pipeline may be spooled off a reel or drum and lowered into the water through a vertical passage in the vessel. A frame structure may be supported above such a vertical passage, said frame structure including guide means for guiding the cable or pipeline from above and down through the frame structure and the vertical passage. Tensioner means supported in the tower-like frame structure are used for applying tension in the cable or pipeline.

It is also known to handle modules and tools through a vertical passage or moonpool on board a vessel.

Deck space is restricted on board a vessel and valuable deck space will be saved if one could combine the facilities for laying of cables/pipelines with those of handling modules and tools through a moonpool.

It is therefore an object of the invention to provide a combined apparatus for handling modules and tools and laying of elongate flexible articles from a vessel supported on a body of water without the various means and components for such handling and laying interfering with another.

According to the invention there is provided an apparatus for laying of an elongate flexible article from a vessel supported on a body of water, including a vertical passage through the vessel and a frame structure supported above the vertical passage, guide means on said frame structure for guiding said elongate flexible article from above and down through the frame structure and the vertical passage, and tensioner means supported on said frame structure for applying tension to said elongate flexible article, characterised in that: means are provided for storing of modules and/or for storing of tools on board said vessel; said tensioner means is located in an upper part of the frame structure supported at a level above the vertical extension of said modules/tools; skidding means are provided for bodily moving said modules/tools from the storing means and towards and into said frame to a position below said tensioner means and above said vertical passage; and elevating and handling means is provided on said frame structure for supporting and lowering said modules/tools through said vertical passage.

In this combined apparatus said modules/tools can be moved towards the frame structure and into it to said position above said vertical passage. The modules/tools may then be lowered down through the vertical passage by the elevating and handling means.

The same elevating and handling means may be adapted to hold said elongate flexible article when said tensioner means is not applying tension to said elongate flexible article.

The frame structure may include a horizontal ring means on a frame top side, said ring means supporting said guide means and said elevating and holding means for horizontal rotational movement.

Said elevating and holding means may comprise a winch mounted on said ring means.

Said tensioner means may preferably comprise a plurality of track tensioner belts.

The skidding means may be adapted for enabling longitudinal and transverse skidding of modules/tools on deck, without any off the deck lifting operation.

The invention further provides a method of operating an apparatus as claimed in any preceding claim, wherein in one period of operation an elongate article is laid beneath the surface of a body of water by means of said guide means, tensioner means and vertical passage, and in another period of operation a module or tool stored in advance in said storage means is moved using said skidding means towards and into the frame structure of the apparatus, into said position below the tensioner means and above said vertical passage, and then supported by said elevating and handling means provided on the frame structure, is lowered through said vertical passage to a desired position beneath the surface of the body of water.

The invention is described in greater detail hereinafter relative to a non-limitative embodiment and the attached drawings which illustrate:
- Figure 1: a perspective view of an apparatus according to an embodiment of the invention;
- Figure 2: a schematic side view of the apparatus of Figure 1;
- Figure 3: a schematic side view of the apparatus of Figure 1 on board a vessel;
- Figure 4: a further schematic side view of the apparatus of Figure 1 on board a vessel; and
- Figure 5: an exploded view of a frame structure of the apparatus of Figure 1.

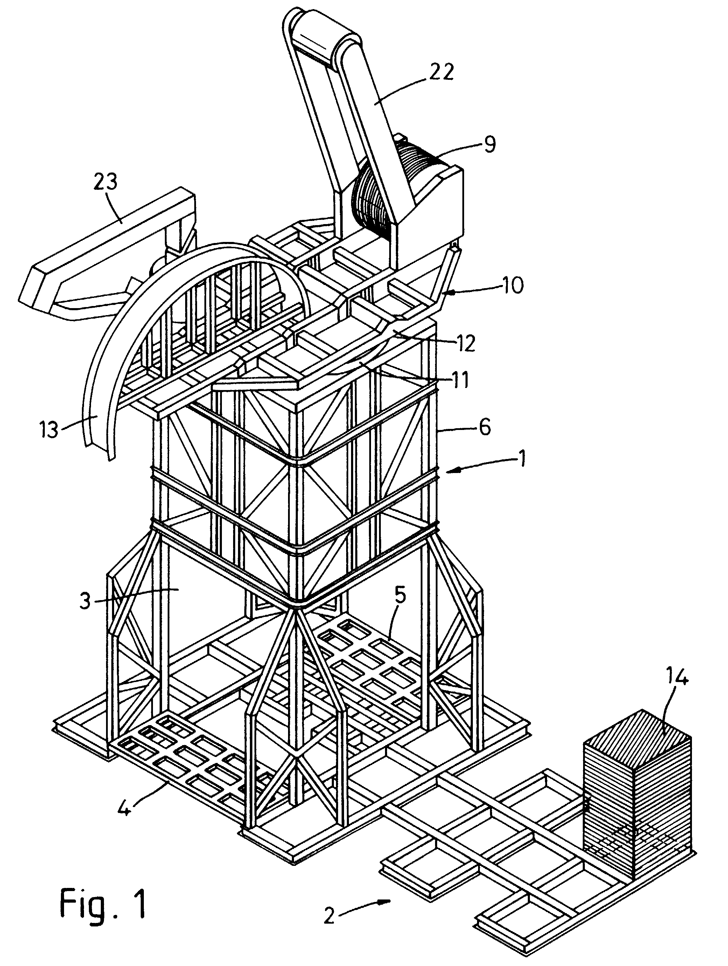

The apparatus in Figure 1 includes a frame structure 1 and a storage and skidding structure 2.

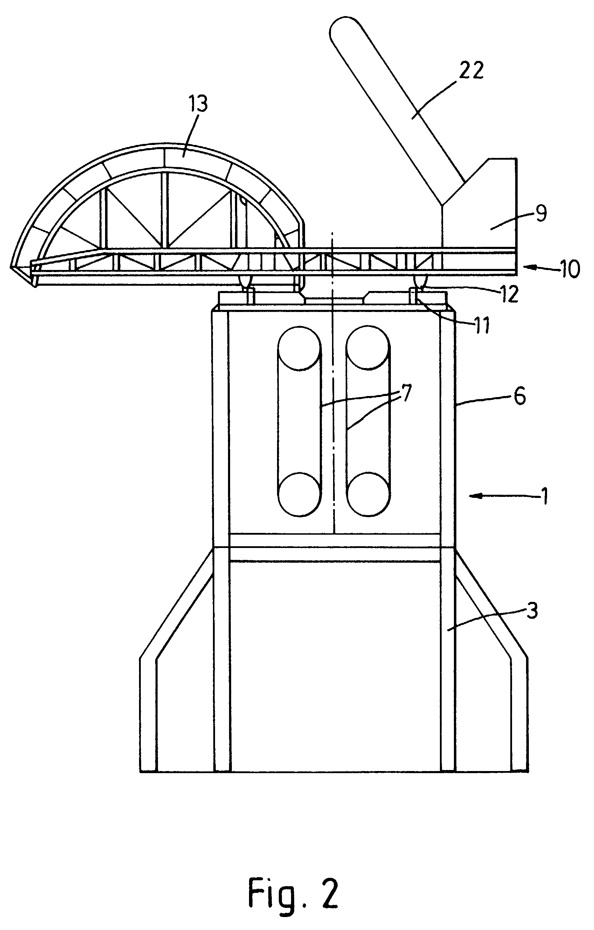

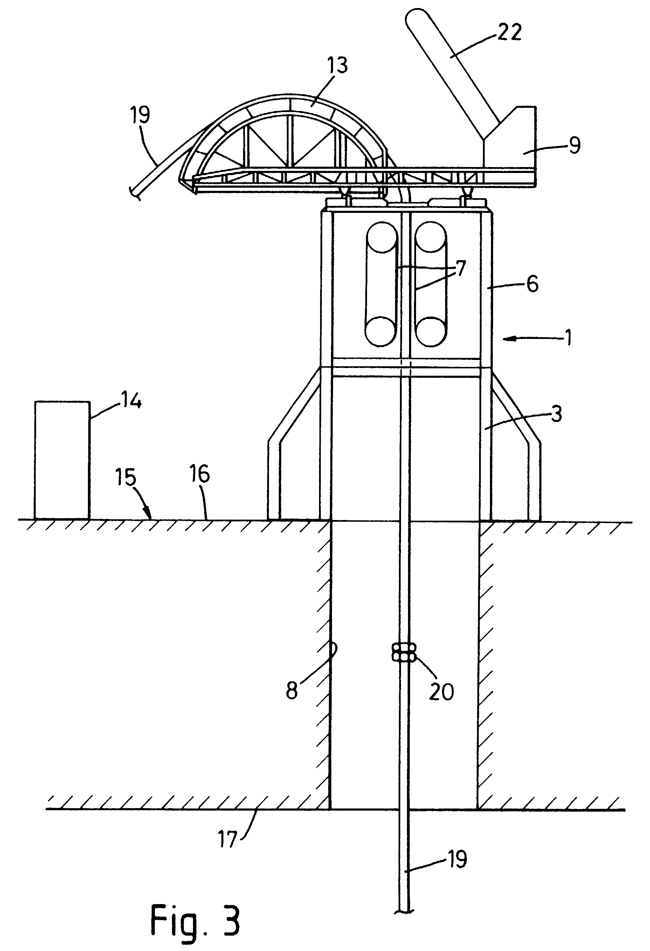

The frame structure 1 has a lower part forming a working arch 3, in the bottom part of which there are two moonpool sliding doors 4 and 5. The frame structure 1 has an upper part 6 wherein track tensioners 7 are arranged (see Figure 2). Preferably there are a total of four track tensioners (only two shown in Figure 2), each being moveable to and from a vertical centerline in the frame structure 1. An elongated article such as a cable can be laid out on the sea bottom, vertically through the frame structure 1 and the underlying vertical passage 8 (Figure 3) engaged by the tensioners 7. The tensioners 7 may be moved radially outwards by means of suitable drive means (not shown) if and when necessary, for instance, to let a thickened cable part go through, in which case the cable will be supported by auxiliary means, such as a wire from a winch 9.

The frame structure 1 further includes a top side rotating assembly 10. This assembly 10 includes a circular rail 11 whereupon runs a carriage 12 which supports an arched guide means 13 as well as the winch 9. The carriage 12 may thus move in a circular path about a vertical axis substantially corresponding to the vertical centerline in the frame structure 1.

The storage and skidding structure 2 is adapted for storing of modules and tools (one module 14 is illustrated in Figure 1) and skidding of modules/tools into the working arch 3, to a handling position in the frame structure 1, above the vertical passage 8. In this position a module or a tool may be elevated (lowered and raised) by suitable means, for instance, by means of the winch 9.

In Figure 3 the apparatus hitherto described is placed on board a vessel 15 having a deck 16, a bottom 17 and a vertical passage or moonpool 8.

A reel (not shown) is supported on the vessel deck 16. This reel carries a length of cable 19 wound thereon. When laid out the cable 19 is unwound from the reel and is, by means of the guide means 13, guided down into the frame structure 1 between the caterpillar tensioners 7. Thus the cable 19 is laid down in the sea through the moonpool 8. The winch 9 is used for temporarily holding the cable 19 if and when for some reason the tensioner assembly is opened, for instance, if the cable 19 has an enlargement such as a joint 20.

The moonpool doors 4 and 5 (Figure 1) are sliding doors, which may be moved to and from each other, and may be used to centralize and support the cable 19.

When not used for laying out of a cable or a pipeline the apparatus may be used for module handling procedures. Modules or tools may be transported from a storage position to a deployment position over the moonpool 8 in the working arch 3.

A vertical module handling system, eg including the winch 9 transports the modules and tools from deck level to for instance a subsea template (not shown).

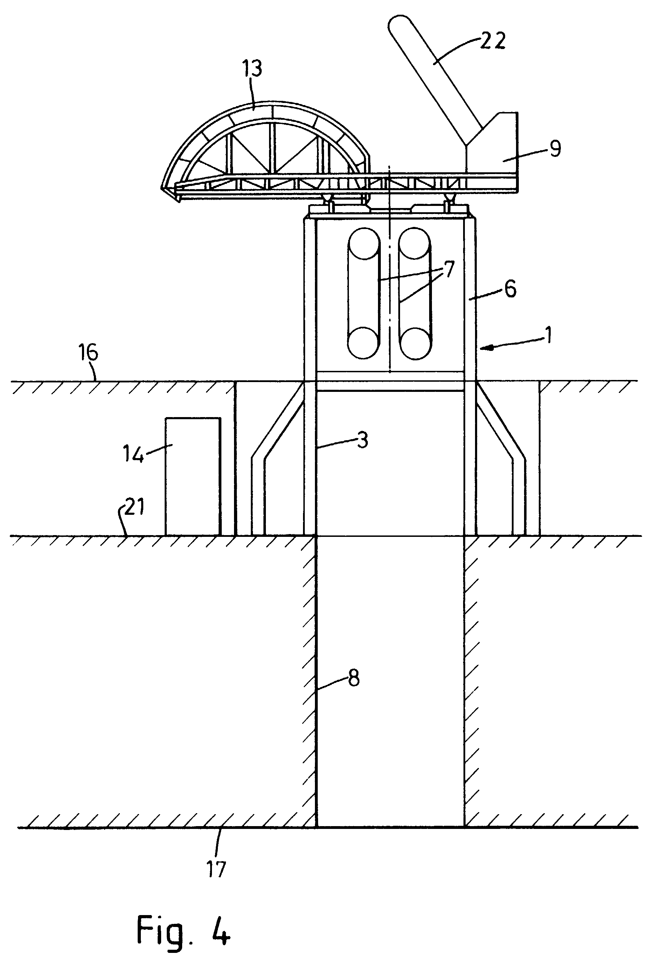

The arrangement in Figure 4 is the same as in Figure 3, the only difference being that the apparatus is arranged with the working arch at a tween deck level 21 where modules/tools 14 are stored and may be transported into the working arch 3.

From the description so far one will understand that there is provided a combined apparatus adapted for use for different operations, namely laying out of for instance, a cable and horizontal and vertical handling of modules and tools as used in subsea operations.

Longitudinal and transverse transporation of modules on deck is possible, without any free lifting operation. Lowering of modules and tools (for instance connection tools) is through a moonpool 8. During the latter operation the modules may be guided with known guide means in the sea. The elevating system, ie the winch 9 may of course include necessary heave compensation.

When in a laying out mode a flexible cable or pipeline is deployed to a vertical position in between the track tensioners 7 and lowered to the seabed through the moonpool 8.

The winch 9 includes an A-frame 22 which permits deployment of a winch cable from the centerline to the side of the tensioner or in between a flexible cable and the tensioner structure.

An extra crane structure is disclosed at 23. A number of handling winches (not shown) may be arranged at deck level around the apparatus.

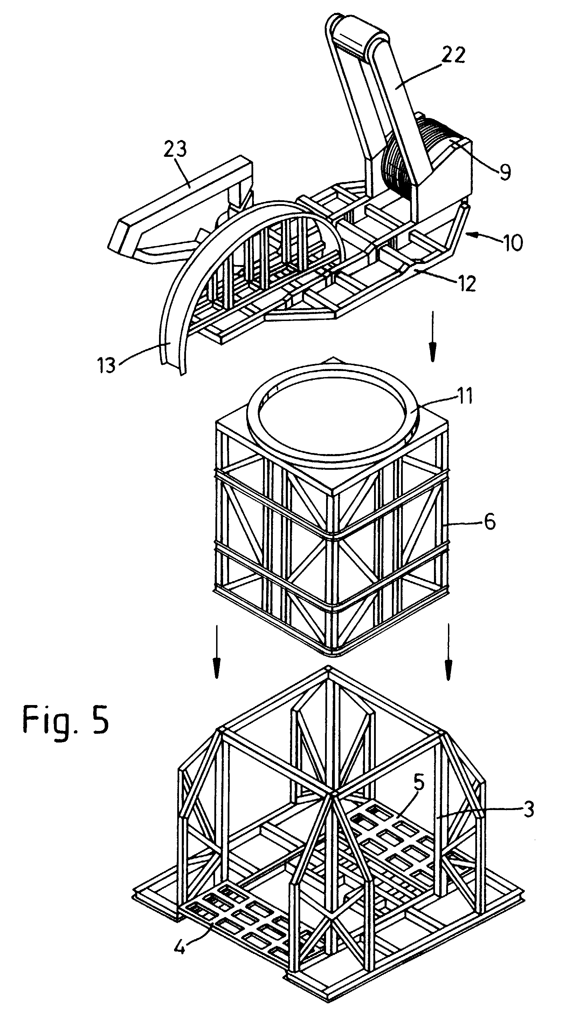

As disclosed in Figure 5 the apparatus may preferably include a frame structure 1 having three main parts, namely a lower part 3 forming a working arch, a tower-like upper part 6 and a top side rotatable assembly 10.

These three parts may preferably be constructed separately and assembled on site (see direction arrows in Figure 5). This favours the construction on site (easier handling of components) and of course also dismantling.

The fourth part of the apparatus - the storage and skidding unit 2 - is not shown in Figure 5.

The embodiments of the invention hereinbefore described are given by way of example only and are not meant to limit the scope thereof in any way.

## Claims

1. An apparatus for laying of an elongate flexible article (19) from a vessel (15) supported on a body of water, including a vertical passage (8) through the vessel and a frame structure (1) supported above the vertical passage, guide means (13) on said frame structure for guiding said elongate flexible article from above and down through the frame structure and the vertical passage, and tensioner means (7) supported on said frame structure for applying tension to said elongate flexible article, characterised in that: means (2) are provided for storing of modules (14) and/or for storing of tools on board said vessel; said tensioner means (7) is located in an upper part of the frame structure supported at a level above the vertical extension of said modules/tools; skidding means are provided for bodily moving said modules/tools from the storing means and towards and into said frame structure to a position below said tensioner means and above said vertical passage; and elevating and handling means is provided on said frame structure for supporting and lowering said modules/tools through said vertical passage.

2. An apparatus as claimed in claim 1, wherein said elevating and handling means comprises a winch (9) adapted to hold said elongate flexible article when said tensioner means is not applying tension to said elongate flexible article and to deploy said modules/tools once positioned in said frame structure.

3. An apparatus as claimed in claim 1 or 2, wherein the frame structure includes a horizontal ring means (11) on a frame top side, said ring means supporting said guide means and said elevating and handling means for horizontal rotational movement thereof.

4. An apparatus as claimed in any of claims 1 to 3, wherein said tensioner means comprises a plurality of track-type tensioner belts.

5. A combined apparatus as claimed in any of claims 1 to 4, including sliding doors (4, 5) for opening and closing of said vertical passage.

6. An apparatus as claimed in any of claims 1 to 5, wherein said frame structure includes a lower part comprising legs for supporting the upper part of the frame structure at four corners so as to define a working arch (3).

7. An apparatus as claimed in any of claims 1 to 6, wherein said frame structure includes a lower part forming a working arch (3), a top part forming a tower-like structure (6) and a top side rotational part (10).

8. An apparatus as claimed in any of claims 1 to 7, wherein said modules/tools are stored and said skidding means is arranged at a tween deck level (21).

9. A method of operating an apparatus as claimed in any preceding claim, wherein in one period of operation an elongate article is laid beneath the surface of a body of water by means of said guide means (13), tensioner means (7) and vertical passage (8), and in another period of operation a (14) module or tool stored in advance in said storage means (2) is moved using said skidding means towards and into the frame structure of the apparatus, into said position below the tensioner means and above said vertical passage, and then, supported by said elevating and handling means provided on the frame structure, is lowered through said vertical passage to a desired position beneath the surface of the body of water.

## Patentansprüche

1. Vorrichtung zum Verlegen eines langgestreckten flexiblen Gegenstands (19) aus einem von einem Wasserkörper getragenen Schiff (15), umfassend einen vertikalen Durchlass (8) durch das Schiff und eine Rahmenkonstruktion (1), die über dem vertikalen Durchlass gehalten wird, eine Führungseinrichtung (13) auf der besagten Rahmenkonstruktion, um den besagten langgestreckten flexiblen Gegenstand von oben und durch die Rahmenkonstruktion und den vertikalen Durchlass nach unten zu führen, sowie eine Spanneinrichtung (7), die auf der besagten Rahmenkonstruktion gehalten wird, um eine Zugkraft auf den besagten langgestreckten flexiblen Gegenstand aufzubringen, dadurch gekennzeichnet, dass: Einrichtungen (2) zum Lagern von Modulen (14) und/oder zum Lagern von Werkzeugen an Bord des besagten Schiffs vorgesehen sind; die besagte Spanneinrichtung (7) in einem oberen Teil der Rahmenkonstruktion angeordnet ist, der auf einem Niveau über der Vertikalerstreckung der besagten Module/Werkzeuge gehalten wird; Gleitverschiebeeinrichtungen vorgesehen sind, um die besagten Module/Werkzeuge aus den Lagereinrichtungen und auf die besagte Rahmenkonstruktion zu und in diese hinein in eine Position unterhalb der besagten Spanneinrichtung und oberhalb des besagten vertikalen Durchlasses zu bewegen; und eine Hebe- und Handhabungseinrichtung auf der besagten Rahmenkonstruktion vorgesehen ist, um die besagten Module/Werkzeuge zu halten und durch den besagten vertikalen Durchlass abzusenken.

2. Vorrichtung nach Anspruch 1, bei der die besagte Hebe- und Handhabungseinrichtung eine Winsch (9) umfasst, die angepasst ist, um den besagten langgestreckten flexiblen Gegenstand zu halten, wenn die besagte Spanneinrichtung keine Zugkraft auf den besagten langgestreckten flexiblen Gegenstand aufbringt, und um die besagten Module/Werkzeuge auszubringen, sobald sie in der besagten Rahmenkonstruktion positioniert sind.

3. Vorrichtung nach Anspruch 1 oder 2, bei der die Rahmenkonstruktion eine horizontale Ringeinrichtung (11) auf einer Rahmenoberseite einschließt, wobei die besagte Ringeinrichtung die besagte Führungseinrichtung und die besagte Hebe- und Handhabungseinrichtung für eine horizontale Drehbewegung derselben trägt.

4. Vorrichtung nach einem der Ansprüche 1 bis 3, bei der die besagte Spanneinrichtung eine Mehrzahl von raupenartigen Spannbändern umfasst.

5. Kombinierte Vorrichtung nach einem der Ansprüche 1 bis 4, umfassend Schiebetüren (4, 5) zum Öffnen und Schließen des besagten vertikalen Durchlasses.

6. Vorrichtung nach einem der Ansprüche 1 bis 5, bei der die besagte Rahmenkonstruktion ein Unterteil einschließt, umfassend Beine, um das Oberteil der Rahmenkonstruktion an vier Ecken zu tragen, so dass ein Arbeitsgewölbe (3) begrenzt wird.

7. Vorrichtung nach einem der Ansprüche 1 bis 6, bei der die besagte Rahmenkonstruktion ein Unterteil einschließt, das ein Arbeitsgewölbe (3) bildet, ein Oberteil, das eine turmartige Konstruktion (6) bildet, sowie ein Drehteil (10) auf der Oberseite.

8. Vorrichtung nach einem der Ansprüche 1 bis 7, bei der auf einem Zwischendeckniveau (21) die besagten Module/Werkzeuge gelagert sind und die besagte Gleitverschiebeeinrichtung angeordnet ist.

9. Verfahren zum Betreiben einer Vorrichtung nach einem vorangehenden Anspruch, bei der in einem Betriebszeitraum ein langgestreckter Gegenstand mit Hilfe der besagten Führungseinrichtung (13), der Spanneinrichtung (7) und des vertikalen Durchlasses (8) unter der Oberfläche eines Wasserkörpers verlegt wird, und in einem anderen Betriebszeitraum ein zuvor in der besagten Lagereinrichtung (2) gelagertes Modul (14) oder Werkzeug unter Verwendung der besagten Gleitverschiebeeinrichtung auf die Rahmenkonstruktion der Vorrichtung zu und in diese hinein in die besagte Position unterhalb der Spanneinrichtung und oberhalb des besagten vertikalen Durchlasses bewegt wird, und dann gehalten von der besagten, auf der Rahmenkonstruktion vorgesehenen Hebe- und Handhabungseinrichtung durch den besagten vertikalen Durchlass in eine gewünschten Position unter der Oberfläche des Wasserkörpers abgesenkt wird.

## Revendications

1. Appareil de pose d'un article souple et allongé (19) à partir d'un bâtiment (15) reposant sur de l'eau, comportant un passage vertical (8) pratiqué dans le bâtiment et une ossature (1) supportée au-dessus du passage vertical, un moyen de guidage (13) prévu sur l'ossature pour guider l'article souple et allongé, depuis le haut vers le bas, à travers l'ossature et le passage vertical, et un moyen tendeur (7) reposant sur l'ossature pour appliquer une tension sur l'article souple et allongé, caractérisé en ce que : un moyen (2) est fourni pour stocker des modules (14) et/ou pour stocker des outils à bord du bâtiment ; le moyen tendeur (7) est placé dans une partie supérieure de l'ossature reposant à un niveau situé au-dessus de l'extension verticale des modules/outils ; un moyen de glissement est fourni pour déplacer, à bras-le-corps, les modules/outils à partir du moyen de stockage vers et dans l'ossature jusqu'à une position située en dessous du moyen tendeur et au-dessus du passage vertical ; et un moyen élévateur et de manutention est fourni sur l'ossature pour supporter et abaisser les modules/outils à travers le passage vertical.

2. Appareil selon la revendication 1, dans lequel le moyen élévateur et de manutention comprend un treuil (9) conçu pour maintenir l'article souple et allongé lorsque le moyen tendeur n'applique pas de tension sur l'article souple et allongé et pour déployer les modules/outils une fois qu'ils sont positionnés dans l'ossature.

3. Appareil selon la revendication 1 ou 2, dans lequel l'ossature comporte un moyen formant anneau horizontal (11) sur un côté supérieur de la structure, le moyen formant anneau supportant le moyen de guidage et le moyen élévateur et de manutention pour lui donner un mouvement de rotation horizontale.

4. Appareil selon l'une quelconque des revendications 1 à 3, dans lequel le moyen tendeur comprend une pluralité de courroies de tension du type à chenilles.

5. Appareil combiné selon l'une quelconque des revendications 1 à 4, comportant des portes coulissantes (4, 5) pour ouvrir et fermer le passage vertical.

6. Appareil selon l'une quelconque des revendications 1 à 5, dans lequel l'ossature comporte une partie inférieure comprenant des pieds pour supporter la partie supérieure de l'ossature aux quatre coins, de façon à définir une embrasure de travail (3).

7. Appareil selon l'une quelconque des revendications 1 à 6, dans lequel l'ossature comporte une partie inférieure formant une embrasure de travail (3), une partie supérieure formant une structure en forme de tour (6) et une partie rotative sur le côté supérieur (10).

8. Appareil selon l'une quelconque des revendications 1 à 7, dans lequel les modules/outils sont stockés et le moyen de glissement est agencé au niveau de l'entrepont (21).

9. Procédé de fonctionnement d'un appareil selon l'une quelconque des revendications précédentes, dans lequel, pendant une période de fonctionnement, un article allongé est posé sous la surface de l'eau au moyen du moyen de guidage (13), du moyen tendeur (7) et du passage vertical (8), et pendant une autre période de fonctionnement, un module (14) ou un outil stocké à l'avance dans le moyen de stockage (2) est déplacé en utilisant le moyen de glissement vers et dans l'ossature de l'appareil, dans la position située en dessous du moyen tendeur et au-dessus du passage vertical, puis, supporté par le moyen élévateur et de manutention fourni sur l'ossature, est abaissé à travers le passage vertical jusqu'à une position désirée en dessous de la surface de l'eau.
